# DEMANDE DE BREVET EUROPEEN

(11) **EP 3 581 780 A1**
(43) Date de publication de la demande: **18.12.2019**
(21) Numéro de dépôt: 19178867.8
(22) Date de dépôt: 06.06.2019
(51) Int. Cl.: F02K 1/82

(54) **TUYERE PRIMAIRE D'UN CONDUIT D'EJECTION PRIMAIRE D'UNE TURBOMACHINE**

(30) Priorité: 11.06.2018 FR 1855081
(71) Demandeur: Airbus Operations (S.A.S.), 31060 Toulouse Cedex 9 (FR)
(72) Inventeur: GACHES, Thierry, 31060 TOULOUSE (FR); CZAPLA, Lionel, 31060 TOULOUSE (FR); SABATHIER, Bastian, 31060 TOULOUSE (FR)
(74) Mandataire: Cabinet Le Guen Maillet

(57) **Abrégé**

L'invention concerne une tuyère primaire (200) d'un conduit d'éjection primaire d'une turbomachine, ladite tuyère primaire (200) comportant une première paroi (202) microperforée, orientée vers l'intérieur et qui s'élargit de l'avant jusqu'à une zone intermédiaire (208), une deuxième paroi (204) mono-élément comportant une partie interne (204a) microperforée, qui s'étend à l'arrière et en continuité de la première paroi (202) à partir de la zone intermédiaire (208) et se resserre à partir de la zone intermédiaire (208) vers l'arrière, une partie externe (204b) orientée vers l'extérieur autour de la partie interne (204a), et un pli (204c) reliant les parties arrière de la partie interne (204a) et de la partie externe (204b), où la première paroi (202) et la partie interne (204a) sont fixées l'une à l'autre, et un élément atténuateur de bruit (210a-b) fixé à la première paroi (202) et à la partie interne (204a).

Une telle tuyère primaire permet donc de limiter les mouvements de la partie interne par rapport à la partie externe et il devient alors possible de positionner un élément atténuateur de bruit sur une plus grande surface.

## Description

### DOMAINE TECHNIQUE

La présente invention concerne une tuyère primaire d'un conduit d'éjection primaire d'une turbomachine, une turbomachine comportant une telle tuyère primaire, ainsi qu'un aéronef comportant au moins une telle turbomachine.

### ETAT DE LA TECHNIQUE ANTERIEURE

Une turbomachine comporte classiquement, de l'avant vers l'arrière, une entrée d'air par laquelle l'air entre dans la turbomachine, un moteur qui assure la combustion de l'air et du carburant, et un conduit d'éjection primaire par lequel sont évacués les gaz brûlés.

La Fig. 9 montre la partie arrière d'une turbomachine qui forme un conduit d'éjection primaire 802 par lequel s'échappent les gaz brûlés par la turbomachine et qui est délimité à l'extérieur par une tuyère primaire 804 et à l'intérieur par une structure interne 806 du conduit d'éjection primaire 802.

A l'arrière de la structure interne 806 est fixé un cône de tuyère 808.

La Fig. 10 montre une coupe de la tuyère primaire 804 par un plan axial.

La tuyère primaire 804 de l'état de la technique comporte une paroi interne 902 qui est orientée vers la structure interne 806 et qui délimite avec la structure interne 806 un canal par où s'échappent les gaz brûlés. La paroi interne 902 est microperforée.

La tuyère primaire 804 comporte une paroi externe 904 qui est orientée vers l'extérieur autour de la paroi interne 902 et qui est donc en contact avec un flux d'air plus frais que les gaz brûlés.

La paroi externe 904 et la paroi interne 902 prennent chacune globalement la forme d'un cylindre et se rejoignent au niveau de leurs extrémités arrière. Les extrémités arrière sont appliquées l'une contre l'autre et fixées ensembles par des moyens de fixation 906 par exemple du type vis (ou de rivets) à tête fraisée.

La paroi externe 904 se resserre de l'avant vers l'arrière tandis que la paroi interne 902 s'élargit de l'avant jusqu'à une zone intermédiaire 908 correspondant sensiblement à un maximum et se resserre à partir de la zone intermédiaire vers l'arrière.

Afin d'atténuer les bruits, un élément atténuateur de bruit 910, par exemple une structure en nid d'abeilles, est fixée à la paroi interne 902 entre la paroi interne 902 et la paroi externe 904.

Du fait que la paroi interne 902 est soumise à de fortes températures, elle subit des dilatations thermiques et la fixation par les moyens de fixation 906 n'empêche pas les déformations de la paroi interne 902. Pour éviter que l'élément atténuateur de bruit 910 soit écrasé entre la paroi interne 902 et la paroi externe 904, il est nécessaire de laisser un jeu entre l'élément atténuateur de bruit 910 et la paroi externe 904.

Globalement, à partir de la zone intermédiaire 908, il devient impossible de disposer l'élément atténuateur de bruit 910 entre la paroi interne 902 et la paroi externe 904, ce qui limite l'atténuation acoustique.

### EXPOSE DE L'INVENTION

Un objet de la présente invention est de proposer une tuyère primaire d'un conduit d'éjection primaire d'une turbomachine qui permet la mise en place d'éléments atténuateurs de bruit sur une plus grande surface de la tuyère primaire.

A cet effet, est proposée une tuyère primaire d'un conduit d'éjection primaire d'une turbomachine, ladite tuyère primaire comportant :
- une première paroi microperforée, orientée vers l'intérieur de la tuyère primaire, et qui s'élargit de l'avant jusqu'à une zone intermédiaire,
- une deuxième paroi mono-élément comportant une partie interne microperforée, qui s'étend à l'arrière de la première paroi et en continuité de celle-ci à partir de la zone intermédiaire et se resserre à partir de la zone intermédiaire vers l'arrière, une partie externe qui est orientée vers l'extérieur de la tuyère primaire autour de la partie interne, et un pli reliant les parties arrière de la partie interne et de la partie externe, où la première paroi et la partie interne sont fixées l'une à l'autre, et
- un élément atténuateur de bruit fixé à la première paroi et à la partie interne, et disposé, d'une part, entre la première paroi et la partie externe, et, d'autre part, entre la partie interne et la partie externe.

Une telle tuyère primaire permet donc de limiter les mouvements de la partie interne par rapport à la partie externe et il devient alors possible de positionner un élément atténuateur de bruit sur une plus grande surface.

Avantageusement, l'extrémité avant de la partie interne présente un décrochement vers l'extérieur et la profondeur de ce décrochement permet de loger l'extrémité arrière de la première partie de manière à ce que la face de la première paroi qui est orientée vers l'intérieur de la tuyère primaire soit affleurante avec la face de la partie interne qui est orientée vers l'intérieur de la tuyère primaire.

Avantageusement, la partie externe est constituée d'une partie externe arrière qui s'étend depuis le pli vers l'avant jusqu'à une zone de jonction, et une partie externe avant qui s'étend depuis la zone de jonction jusqu'à l'avant, et l'extrémité avant de la partie externe arrière et l'extrémité arrière de la partie externe avant sont fixées l'une à l'autre.

Avantageusement, l'extrémité avant de la partie externe arrière présente un décrochement vers l'intérieur et la profondeur de ce décrochement permet de loger l'extrémité arrière de la partie externe avant de manière à ce que la face de la partie externe arrière qui est orientée vers l'extérieur de la tuyère primaire soit affleurante avec la face de la partie externe avant qui est orientée vers l'intérieur de la tuyère primaire.

L'invention propose également une turbomachine comportant un conduit d'éjection primaire délimité à l'extérieur par une tuyère primaire selon l'une des variantes précédentes et à l'intérieur par une structure interne.

L'invention propose également un aéronef comportant au moins une turbomachine selon la variante précédente.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

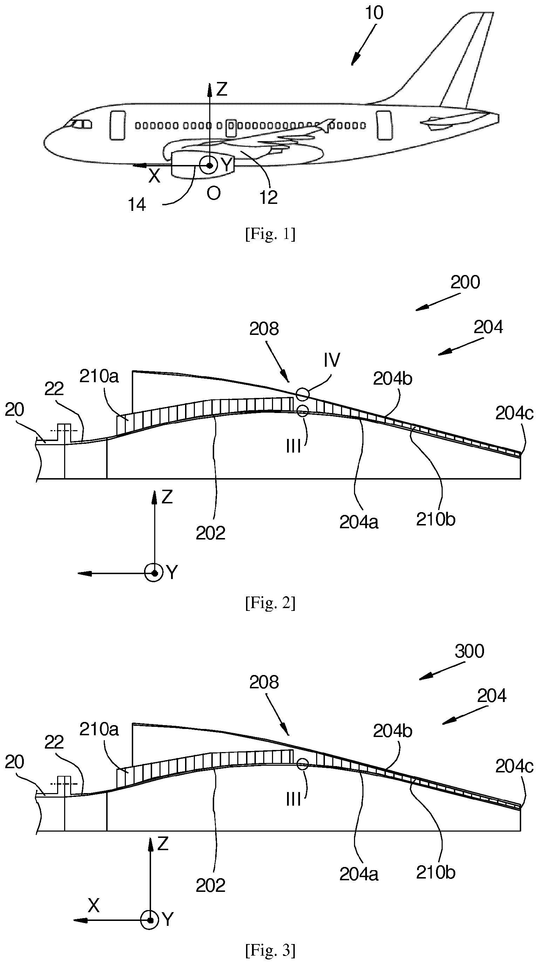

la Fig. 1 est une vue de côté d'un aéronef selon l'invention,
la Fig. 2 est une vue de côté et en coupe par un plan axial d'une tuyère primaire selon un premier mode de réalisation de l'invention,
la Fig. 3 est une vue de côté et en coupe par un plan axial d'une tuyère primaire selon un deuxième mode de réalisation de l'invention,

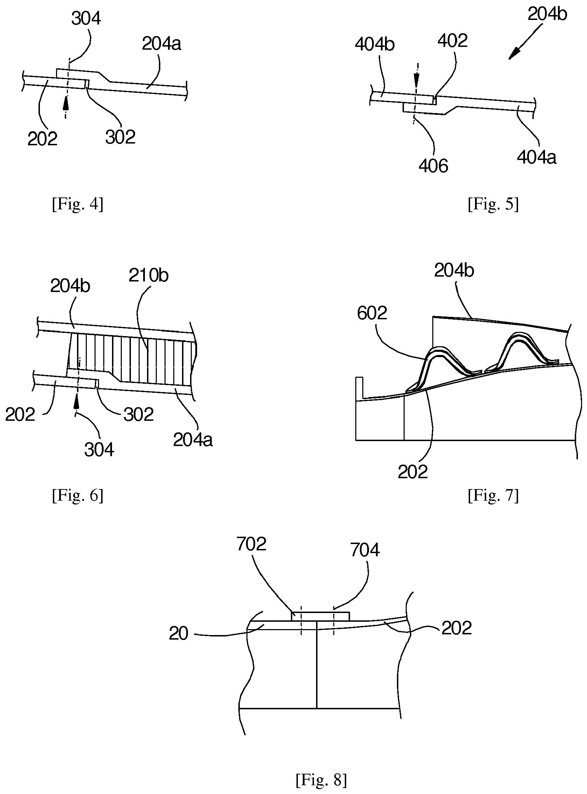

la Fig. 4 est un agrandissement du détail III de la Fig. 2 et de la Fig. 3,
la Fig. 5 est un agrandissement du détail IV de la Fig. 2,
la Fig. 6 est une vue correspondante à la Fig. 5 pour une variante de réalisation,
la Fig. 7 montre la mise en place d'éléments atténuateurs de bruit particuliers,
la Fig. 8 montre une vue en coupe d'une variante de fixation de la tuyère primaire selon l'invention,

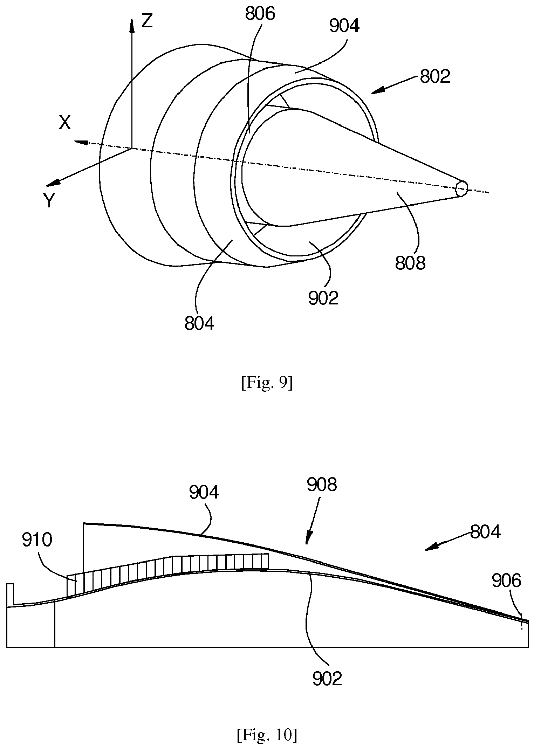

la Fig. 9 montre une partie arrière d'une turbomachine qui forme un conduit d'éjection primaire, et
la Fig. 10 montre une coupe d'une tuyère primaire de l'état de la technique par un plan axial.

### EXPOSE DETAILLE DE MODES DE REALISATION

La Fig. 1 montre un aéronef 10 qui comporte une aile 12 sous laquelle est fixée une nacelle 14 dans laquelle est logée une turbomachine.

Dans la description qui suit, et par convention, on appelle X l'axe longitudinal de la turbomachine, orienté positivement dans le sens d'avancement de l'aéronef 10 et qui est également l'axe longitudinal de la nacelle 14, on appelle Y l'axe transversal qui est horizontal lorsque l'aéronef 10 est au sol, et Z l'axe vertical ou hauteur verticale lorsque l'aéronef 10 est au sol, ces trois directions X, Y et Z étant orthogonales entre elles et formant un repère orthonormé.

Dans la description qui suit, les termes relatifs à une position sont pris en référence à l'orientation de l'aéronef 10 lorsqu'il avance.

La turbomachine comporte à l'arrière un conduit d'éjection primaire qui comporte les mêmes éléments que celui de la Fig. 9. Les gaz brûlés par la turbomachine sont évacués par le conduit d'éjection primaire qui est délimité à l'extérieur par une tuyère primaire et à l'intérieur par une structure interne du conduit d'éjection primaire.

La Fig. 2 montre une vue de côté d'une tuyère primaire 200 selon un premier mode de réalisation de l'invention. La Fig. 3 montre une vue de côté d'une tuyère primaire 300 selon un deuxième mode de réalisation de l'invention. La Fig. 4 montre un agrandissement du détail III qui est commun aux deux modes de réalisation et la Fig. 5 montre un agrandissement du détail IV du premier mode de réalisation de l'invention.

La tuyère primaire 200, 300 comporte une première paroi 202 qui est orientée vers la structure interne, c'est-à-dire vers l'intérieur de la tuyère primaire 200 et qui s'élargit de l'avant jusqu'à une zone intermédiaire 208 qui correspond globalement à un maximum. La première paroi 202 est microperforée pour laisser passer l'air.

La tuyère primaire 200, 300 comporte une deuxième paroi 204 qui comporte une partie interne 204a qui s'étend à l'arrière de la première paroi 202 et en continuité de celle-ci à partir de la zone intermédiaire 208 et se resserre à partir de la zone intermédiaire 208 vers l'arrière. La première paroi 202 et la partie interne 204a délimitent avec la structure interne un canal par où s'échappent les gaz brûlés. La partie interne 204a est microperforée pour laisser passer l'air.

La deuxième paroi 204 comporte également une partie externe 204b qui est orientée vers l'extérieur de la tuyère primaire 200, 300 autour de la partie interne 204a et qui est donc en contact avec un flux d'air plus frais que les gaz brûlés.

La partie interne 204a et la partie externe 204b forment un seul et même élément et sont solidaires l'une de l'autre au niveau de leurs parties arrière par l'intermédiaire d'un pli 204c qui les relie et forme l'extrémité arrière de la deuxième paroi 204 et de la tuyère primaire 200, 300. Le pli 204c est à 180°.

Comme le montre la Fig. 4, l'extrémité arrière de la première paroi 202 et l'extrémité avant de la partie interne 204a sont fixées l'une à l'autre.

La structure mono-élément de la deuxième paroi 204 permet de limiter les mouvements entre la partie interne 204a et la partie externe 204b et il est alors possible de mettre en place un élément atténuateur de bruit 210a-b sur une plus grande surface de la tuyère primaire 200, 300, et ainsi d'améliorer l'atténuation des bruits.

La séparation entre la première paroi 202 et la deuxième paroi 204 facilite l'accès à la zone entre la partie interne 204a et la partie externe 204b.

L'élément atténuateur de bruit 210a-b est constitué ici de deux éléments indépendants, où le premier élément 210a est fixé à la face orientée vers l'extérieur de la première paroi 202 et où le deuxième élément 210b est fixé à la face orientée vers l'extérieur de la partie interne 204a. L'élément atténuateur de bruit 210a-b est ainsi disposé, d'une part, entre la première paroi 202 et la partie externe 204b, et, d'autre part, entre la partie interne 204a et la partie externe 204b.

La première paroi 202 prend globalement la forme d'un cylindre. La partie interne 204a et la partie externe 204b prennent chacune globalement la forme d'un cylindre.

Pour limiter les perturbations du flux des gaz brûlés au niveau de la jonction entre la première paroi 202 et la partie interne 204a, celle-ci est rendue plane, par réalisation d'un décrochement 302 de l'extrémité avant de la partie interne 204a vers l'extérieur de la tuyère primaire 200, 300 et où la profondeur de ce décrochement 302 permet de loger l'extrémité arrière de la première partie 202 de manière à ce que la face de la première paroi 202 qui est orientée vers l'intérieur de la tuyère primaire 200, 300 soit affleurante avec la face de la partie interne 204a qui est orientée vers l'intérieur de la tuyère primaire 200, 300.

La fixation entre la première paroi 202 et la partie interne 204a est assurée par tous moyens de fixation 304 appropriés comme par exemple des rivets ou des vis à tête fraisée qui se vissent depuis l'intérieur de la tuyère primaire 200, 300.

Dans le premier mode de réalisation de l'invention et pour faciliter la réalisation de la partie externe 204b, celle-ci est constituée d'une partie externe arrière 404a et une partie externe avant 404b comme le montre la Fig. 5. La partie externe arrière 404a s'étend depuis le pli 204c vers l'avant jusqu'à une zone de jonction qui correspond ici sensiblement à la zone intermédiaire 208. La partie externe avant 404b prolonge la partie externe arrière 404a et s'étend depuis la zone de jonction jusqu'à l'avant.

L'extrémité avant de la partie externe arrière 404a et l'extrémité arrière de la partie externe avant 404b sont fixées l'une à l'autre.

Pour limiter les perturbations du flux d'air sur la partie externe 204b au niveau de la jonction entre la partie externe arrière 404a et la partie externe avant 404b, celle-ci est rendue plane, par réalisation d'un décrochement 402 de l'extrémité avant de la partie externe arrière 404a vers l'intérieur de la tuyère primaire 200 et où la profondeur de ce décrochement 402 permet de loger l'extrémité arrière de la partie externe avant 404b de manière à ce que la face de la partie externe arrière 404a qui est orientée vers l'extérieur de la tuyère primaire 200 soit affleurante avec la face de la partie externe avant 404b qui est orientée vers l'intérieur de la tuyère primaire 200.

La fixation entre la partie externe arrière 404a et la partie externe avant 404b est assurée par tous moyens de fixation 406 appropriés comme par exemple des rivets ou des vis à tête fraisée qui se vissent depuis l'extérieur de la tuyère primaire 200.

L'élément atténuateur de bruit 210a-b peut prendre différentes formes selon les fréquences des bruits à atténuer.

Dans le mode de réalisation de la Fig. 3, le premier élément 210a et le deuxième élément 210b sont chacun constitués d'une structure en nid d'abeilles qui vise les hautes fréquences.

Comme le montre la Fig. 7, il est également possible de remplacer la structure en nid d'abeilles par des cônes 602 dont les bases ouvertes sont fixées à la paroi microperforée, ici la première paroi 202. Des cônes peuvent également être fixés à la partie interne 204a. Selon sa structure, un cône vise les hautes fréquences, ou les hautes et les basses fréquences.

Comme le montre la Fig. 6, la structure en nid d'abeilles constituant le deuxième élément 210b peut recouvrir la partie interne 204a jusqu'à son extrémité avant.

La tuyère primaire 200, 300, c'est-à-dire la première paroi 202 et la deuxième paroi 204 peuvent être en métal, mais préférentiellement elles sont réalisées en titane, en alliage de nickel, ou en céramique. Il est également possible d'avoir une première paroi 202 en métal, titane ou alliage de nickel, et une deuxième paroi 204 en céramique.

Dans le mode de réalisation de l'invention représenté aux Figs. 2 et 3, la tuyère primaire 200, 300 est fixée à la structure 20 de la turbomachine par l'intermédiaire d'une bride 22 à laquelle l'extrémité avant de la première paroi 202 est soudée.

Dans le mode de réalisation de l'invention présenté à la Fig. 8, la fixation de la première paroi 202 à la structure 20 s'effectue grâce à la mise en place d'une pluralité d'éclisses 702 qui sont réparties sur le pourtour de la jonction entre la structure 20 et la première paroi 202 et où chaque éclisse 702 est fixée à la structure 20 et à la première paroi 202 par des moyens de fixation 704 appropriés comme par exemple des vis.

## Revendications

1. Tuyère primaire (200, 300) d'un conduit d'éjection primaire d'une turbomachine, ladite tuyère primaire (200, 300) comportant :
- une première paroi (202) microperforée, orientée vers l'intérieur de la tuyère primaire (200, 300), et qui s'élargit de l'avant jusqu'à une zone intermédiaire (208),
- une deuxième paroi (204) mono-élément comportant une partie interne (204a) microperforée, qui s'étend à l'arrière de la première paroi (202) et en continuité de celle-ci à partir de la zone intermédiaire (208) et se resserre à partir de la zone intermédiaire (208) vers l'arrière, une partie externe (204b) qui est orientée vers l'extérieur de la tuyère primaire (200, 300) autour de la partie interne (204a), et un pli (204c) reliant les parties arrière de la partie interne (204a) et de la partie externe (204b), où la première paroi (202) et la partie interne (204a) sont fixées l'une à l'autre, et
- un élément atténuateur de bruit (210a-b) fixé à la première paroi (202) et à la partie interne (204a), et disposé, d'une part, entre la première paroi (202) et la partie externe (204b), et, d'autre part, entre la partie interne (204a) et la partie externe (204b).

2. Tuyère primaire (200, 300) selon la revendication 1, **caractérisée en ce que** l'extrémité avant de la partie interne (204a) présente un décrochement (302) vers l'extérieur et **en ce que** la profondeur de ce décrochement (302) permet de loger l'extrémité arrière de la première partie (202) de manière à ce que la face de la première paroi (202) qui est orientée vers l'intérieur de la tuyère primaire (200, 300) soit affleurante avec la face de la partie interne (204a) qui est orientée vers l'intérieur de la tuyère primaire (200, 300).

3. Tuyère primaire (200) selon l'une des revendications 1 ou 2, **caractérisée en ce que** la partie externe (204b) est constituée d'une partie externe arrière (404a) qui s'étend depuis le pli (204c) vers l'avant jusqu'à une zone de jonction, et une partie externe avant (404b) qui s'étend depuis la zone de jonction jusqu'à l'avant, et **en ce que** l'extrémité avant de la partie externe arrière (404a) et l'extrémité arrière de la partie externe avant (404b) sont fixées l'une à l'autre.

4. Tuyère primaire (200) selon la revendication 3, **caractérisée en ce que** l'extrémité avant de la partie externe arrière (404a) présente un décrochement (402) vers l'intérieur et **en ce que** la profondeur de ce décrochement (402) permet de loger l'extrémité arrière de la partie externe avant (404b) de manière à ce que la face de la partie externe arrière (404a) qui est orientée vers l'extérieur de la tuyère primaire (200) soit affleurante avec la face de la partie externe avant (404b) qui est orientée vers l'intérieur de la tuyère primaire (200).

5. Turbomachine comportant un conduit d'éjection primaire délimité à l'extérieur par une tuyère primaire (200, 300) selon l'une des revendications précédentes et à l'intérieur par une structure interne.

6. Aéronef (10) comportant au moins une turbomachine selon la revendication 5.
